# EUROPEAN PATENT SPECIFICATION

(11) **EP 2 487 529 B1**
(45) Date of publication and mention of the grant of the patent: **21.05.2014**
(21) Application number: 11177487.3
(22) Date of filing: 12.08.2011
(51) Int. Cl.: G02F 1/1335

(54) **Display panel comprising metal grid color selective polarizer**
Anzeigetafel mit farbselektivem Metallgitter-Polarisator
Panneau d'affichage comprenant un polariseur sélectif de couleur de type à grille métallique

(30) Priority: 14.02.2011 US 442394 P; 22.04.2011 KR 20110037632
(43) Date of publication of application: 15.08.2012
(73) Proprietor: Samsung Electronics Co., Ltd., Suwon-si, Gyeonggi-do, 443-742 (KR)
(72) Inventor: Chung, Seong-eun, Seoul (KR); Kim, Dong-hwan, Seoul (KR); Jung, Il-yong, Gyeonggi-do (KR)
(74) Representative: Clark, David James

(56) References cited:
- WO-A2-2011/139785
- US-A1- 2007 019 292
- US-A1- 2009 273 744
- Y. YE, Y. ZHANG, Y. ZHOU, S. SHEN, L. CHEN: "Efficiency improvement for a polarizing color filter based on submicron metal grating", PROC. OF SPIE, vol. 7848, 78480C, 2010, XP040546046, DOI: 10.1117/12.870577
- T. XU, Y.-K. WU, L.J. GUO: "Nanostructured metal-insulator-metal resonators for high-resolution color filtering and spectral imaging", PROC. OF SPIE, vol. 7946, 794621, 24 January 2011 (2011-01-24), pages 1-6, XP040555106, DOI: 10.1117/12.874363

## Description

### 1. Field

Apparatuses and methods consistent with the exemplary embodiments relate to a display panel and a method of manufacturing a display apparatus including the same, and more particularly, to a display panel including a color filter polarizing layer and a polarizing layer and a method of manufacturing a display apparatus including the same.

### 2. Description of the Related Art

A liquid crystal display (LCD) panel includes first and second substrates having a liquid crystal layer formed therebetween, and a polarizing film for polarizing light incident on the first and second substrates. Also, the LCD panel includes a color filter layer in order to represent color with light. As the incident light passes through the polarizing film and the color filter layer, the optical efficiency of the light becomes lowered. Meanwhile, the LCD panel may further include a dual brightness enhance film (DBEF) at a light-incident side so as to compensate for light loss due to polarization.

The polarizing film and the DBEF increase manufacturing costs of the LCD panel or the display apparatus and make a manufacturing process complicated.

US 2009/0273744 A1 describes a polarizer and a method for producing the same, and an LCD device according to the preamble of claim 1. The polarizer includes a glass substrate and a metal wire grating disposed on the glass substrate.

US 2007/0019292 A1 describes a hybrid-type polarizer having a reflective-type polarizing filter and a color filter, a method of manufacturing the hybrid-type polarizer and a display device having the hybrid-type polarizer, and hybrid-type polarizer includes a base member and a polarizing color filter member. The polarizing color filter member includes a plurality of metal gratings in a plurality of regions of the base member.

### SUMMARY

One or more exemplary embodiments provide a display panel and a method of manufacturing a display apparatus including the same, in which manufacturing costs are decreased and a manufacturing process is simplified.

According to another aspect of an exemplary embodiment, there is provided a display panel having improved optical efficiency and a method of manufacturing a display apparatus including the same.

The foregoing and/or other aspects may be achieved by providing a display panel as defined in claim 1. disposed opposite to each other; a color filter polarizing layer which is formed on a surface of one of the first and second substrates between the first and second substrates, and includes a metal linear grid arranged at different pitches to emit in different colors a first polarized component of incident light; and a polarizing layer formed on an opposite surface to the surface of one of the first and second substrates, wherein the metal linear grid comprises a first metal layer, an insulating

The polarizing layer may further include a polarizing film transmitting a second polarized component different from the first polarized component.

The display panel may further include a pixel layer formed on the surface of one of the first and second substrates and including a plurality of pixels, each including a plurality of sub pixels, and at least three sub pixels each corresponding to the different arranged pitches of the metal linear grid.

The metal linear grid may include a red metal linear grid arranged to transmit red light, a green metal linear grid arranged to transmit green light and a blue metal linear grid arranged to transmit blue light, and every pitch of the red metal linear grid may be formed so that every pitch is shorter than 1/2 of a red light wavelength, the green metal linear grid is formed so that every pitch is shorter than 1/2 of a green light wavelength, and the blue metal linear grid is formed so that every pitch is shorter than 1/2 of a blue light wavelength.

The display panel may comprise an additional polarizing layer (700) beneath the color filter polarizing layer (300) to transmit the first polarized component, wherein the additional polarizing layer (700) comprises an additional metal linear grid (710) arranged substantially the same direction as the metal linear grid (310) whereby the first polarized component of the incident light passing through the color filter polarizing layer (300) is in red, blue and green colors.

A height of the metal linear grid may be larger than a width thereof.

The color filter polarizing layer may further include a dielectric layer stacked beneath the metal linear grid.

According to another aspect of an exemplary embodiment, there is provided a display apparatus including a display apparatus having a liquid crystal layer, including a display panel which includes first and second substrates which are disposed opposite to each other, a color filter polarizing layer which is formed on a surface of one of the first and second substrates between the first and second substrates, and includes a metal linear grid arranged with different pitches to emit a first polarized component of incident light with different colors, and a polarizing layer formed on a surface opposite to the surface of one of the first and second substrates; and a backlight assembly which emits light to the display panel.

According to another aspect of an exemplary embodiment, there is provided a method of manufacturing a display apparatus as defined in claim 8.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 shows a layer structure of a display panel according to an exemplary embodiment;
FIG. 2 is a cross-section view of a display panel of FIG. 1;
FIG. 3 is a view showing a color filter polarizing layer of FIG. 1;
FIGs. 4A and 4B are views showing a metal linear grid of a sub pixel;
FIG. 5 is a cross-section view of a color filter polarizing layer of FIG. 3;
FIG. 6 is a cross-section view of another color filter polarizing layer according to an exemplary embodiment;
FIG. 7 is a cross-section view of still another color filter polarizing layer according to an exemplary embodiment;
FIGs. 8A to 8E are views for explaining a manufacturing method for a display panel according to an exemplary embodiment;
FIG. 9 is a view showing a layer structure of a display panel according to another exemplary embodiment;
FIG. 10 is a cross-section view of the display panel of FIG. 9;
FIG. 11 is a view showing a layer structure of a display panel according to still another exemplary embodiment;
FIG. 12 is a cross-section of the display panel of FIG. 11;
FIG. 13 is a schematic view of a display apparatus according to an exemplary embodiment;
FIG. 14 is a control block diagram of a display apparatus according to an exemplary embodiment; and
FIG. 15 is a view for explaining a manufacturing method of the display apparatus of FIG. 13.

### DETAILED DESCRIPTION OF THE EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

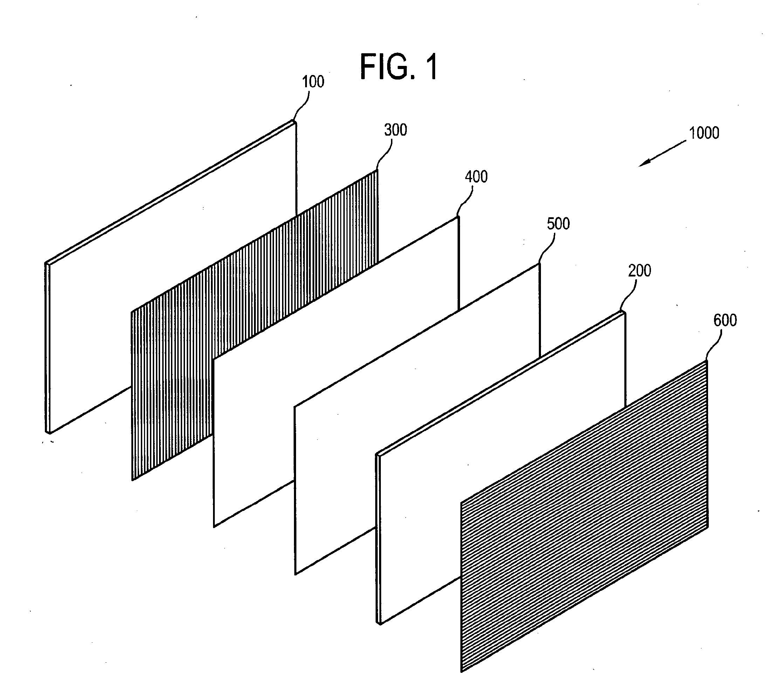

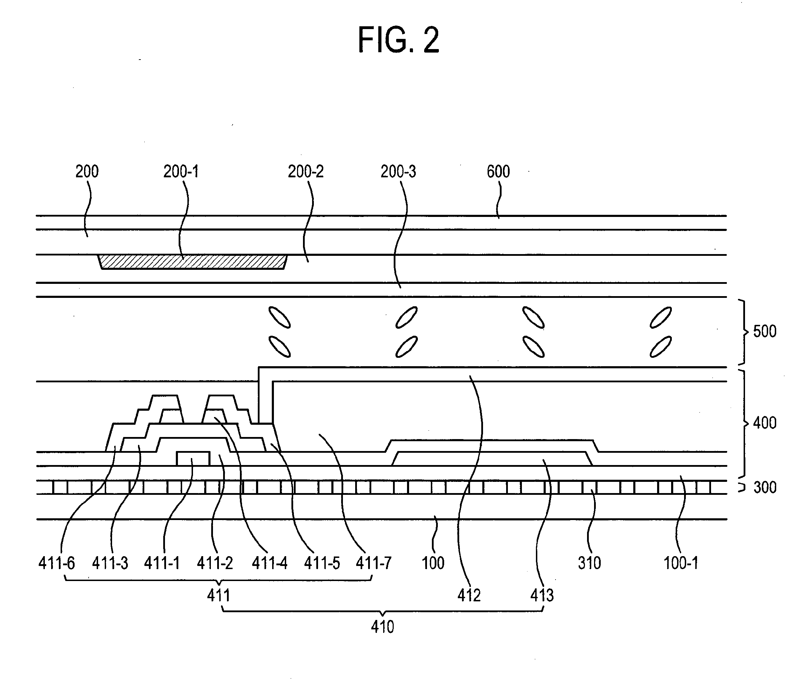

FIG. 1 shows a layer structure of a display panel according to an exemplary embodiment, and FIG. 2 is a cross-section view showing a display panel of FIG. 1.

As shown therein, a display panel 1000 in this exemplary embodiment includes first and second substrates 100 and 200 opposite to each other, and a color filter polarizing layer 300, a pixel layer 400 and a liquid crystal layer 500 arranged in sequence between the first and second substrates 100 and 200, and a polarizing film 600 arranged on an outside surface of the second substrate 200. The display panel 1000 including the liquid crystal layer 500 may be used in a television, home appliances such as a monitor, a cellular phone, a portable multimedia player (PMP), a Netbook, a notebook computer, a mobile terminal such as an E-book terminal or the like, a display apparatus for exhibition and advertisement, etc.

The color filter polarizing layer 300 and the pixel layer 400 are formed in sequence on the first substrate 100, and a polarizing film 600 is formed on the second substrate 200. As shown in FIG. 2, the second substrate 200 is formed with a black matrix 200-1 in a region corresponding to the TFT 411 of the first substrate 100, and a common electrode 200-3 generating a voltage corresponding to the pixel electrode 412. The liquid crystal layer 500, of which alignment is adjusted by applying a voltage, is inserted between the first and second substrates 100 and 200. The array of the liquid crystal layer 500 is controlled in accordance with a twisted nematic (TN) mode, a vertical alignment (VA) mode, a patterned vertical alignment (PVA) mode, an in-plane switching (IPS) mode or the like operating mode of the display panel 1000. To improve an optical viewing angle of the display panel 1000, sub pixels are divided or patterned, the refractive index of the liquid crystal is uniformly adjusted, or the like technology may be used.

The color filter polarizing layer 300 is formed on the first substrate 100, and the pixel layer 400 for controlling the liquid crystal array and displaying an image is formed on the color filter polarizing layer 300. The color filter polarizing layer 300 includes the metal linear grid 310 arranged with different pitches so that first polarized component of the incident light can be emitted as light of different color. The polarizing film 600 transmits light of a second polarized component different from the first polarized component. On the metal linear grid 310, a planarization layer 100-1 is formed for protecting and levelling the metal linear grid 310. The metal linear grid 310 included in the color filter polarizing layer 300 will be described below in detail.

The pixel layer 400 formed on the planarization layer 100-1 includes a plurality of pixels (not shown) for changing the liquid crystal array filled in the liquid crystal layer 500 on the basis of a control signal received from the exterior, and each pixel includes a plurality of sub pixels 410. In this exemplary embodiment, the sub pixels 410 represent the smallest unit pixels in which video signal values corresponding to red, green and blue are input, and a unit, which includes a plurality of sub pixels 410 and expresses one video signal, is regarded as the pixel. The sub pixel 410 includes a thin film transistor (TFT) 411 as a switching device, and a pixel electrode 412. The sub pixel 410 has a two-dimensional spatial concept as well as a physical concept including the TFT 411 and the pixel electrode 412.

On the planarization layer 100-1 of the first substrate 100, the gate electrode 411-1 is formed. The gate electrode 411-1 may be a single or multiple layers containing metal. On the same layer as the gate electrode 411-1, there are further formed a gate line (not shown) connected to the gate electrode 411-1 and arranged in a transverse direction of the display panel 1000, and a gate pad (not shown) connected to a gate driver (not shown) and transmitting a driving signal to the gate line. Also, on the same layer as the gate electrode 411-1, a sustain electrode 413 is formed for building electric charges up.

On the first substrate 100, a gate insulating layer 411-2 containing silicon nitride (SiNx) or the like covers the gate electrode 411-1 and the sustain electrode 413.

On the gate insulating layer 411-2 of the gate electrode 411-1, a semiconductor layer 411-3 containing amorphous silicon or the like semiconductor is formed. On the semiconductor layer 411-3, an ohmic contact layer 411-4 containing n+ hydrogenated amorphous silicon or the like material highly doped with silicide or n-type impurities is formed. Further, the ohmic contact layer 411-4 is removed in a channel portion between a source electrode 411-5 and a drain electrode 411-6 to be described later.

On the ohmic contact layer 411-4 and the gate insulating layer 411-2, data wiring lines 411-5 and 411-6 are formed. The data wiring lines 411-5 and 411-6 may also be a single or multiple layer containing metal. The data wiring lines 411-5 and 411-6 includes a data line (not shown) formed in a vertical direction and intersecting a gate line (not shown) to form the sub pixel 410, a source electrode 411-5 branched from the data line and extended to an upper portion of the ohmic contact layer 411-4, and a drain electrode 411-6 separated from the source electrode 411-5 and formed on an upper portion of the ohmic contact layer 411-4 opposite to the source electrode 411-5.

On the data wiring lines 411-5 and 411-6 and the semiconductor layer 411-3 that is not covered with the data wiring lines 411-5 and 411-6, a passivation layer 411-7 is formed. At this time, silicon nitride or the like inorganic insulting film may be further formed between the passivation layer 411-7 and the TFT 411, thereby securing the reliability of the TFT 411.

Typically, the pixel electrode 412 formed on the passivation layer 411-7 contains indium tin oxide (ITO) or indium zinc oxide (IZO), or the like transparent conductive material. The pixel electrode 412 is electrically connected to the source electrode 411-5.

On the planarization layer 100-1 of the second substrate 200, the black matrix 200-1 is formed in a region corresponding to the TFT 411 of the first substrate 100. Generally, the black matrix 200-1 serves to divide the sub pixels 410 and prevent the TFT 411 from being exposed to external light. The black matrix 200-1 contains a photosensitive organic material with black dye. As the black dye, carbon black, titanium oxide or the like is used.

On the black matrix 200-1, an overcoat layer 200-2 is formed for leveling and protecting the black matrix 200-1. As the overcoat layer 200-2, an acrylic epoxy material is typically used.

On the overcoat layer 200-2, a common electrode 200-3 is formed. The common electrode 200-3 is made of a transparent conductive material such as indium tin oxide (ITO), indium zinc oxide (IZO), etc. The common electrode 200-3, together with the pixel electrode 412 of the first substrate 100, directly apply a voltage to the liquid crystal layer 500.

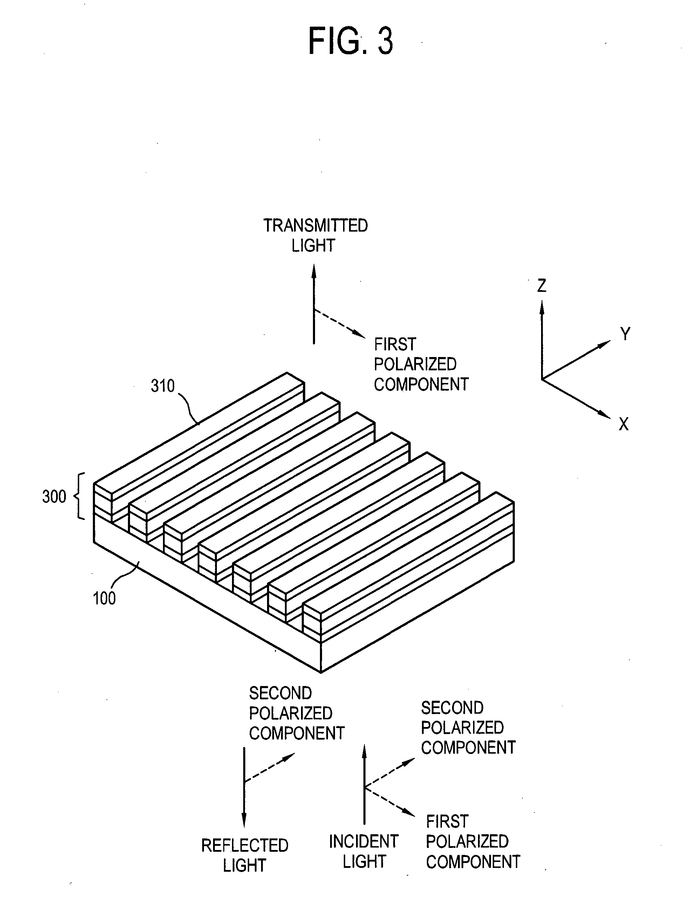

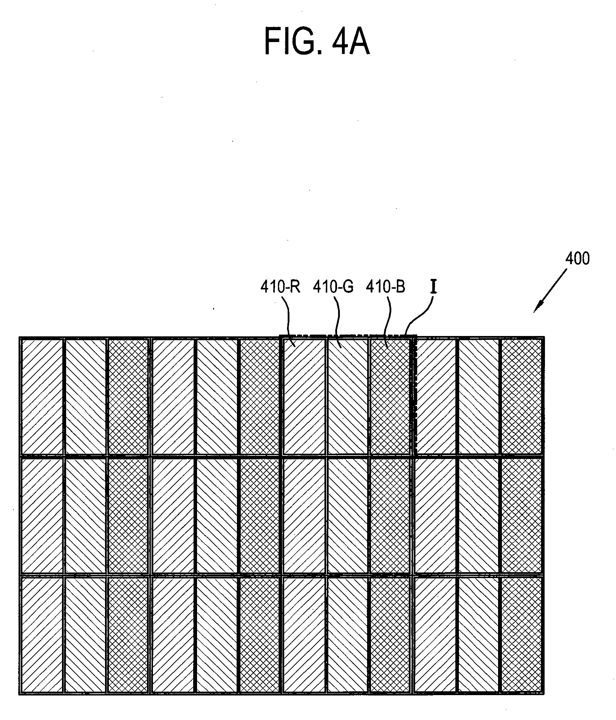

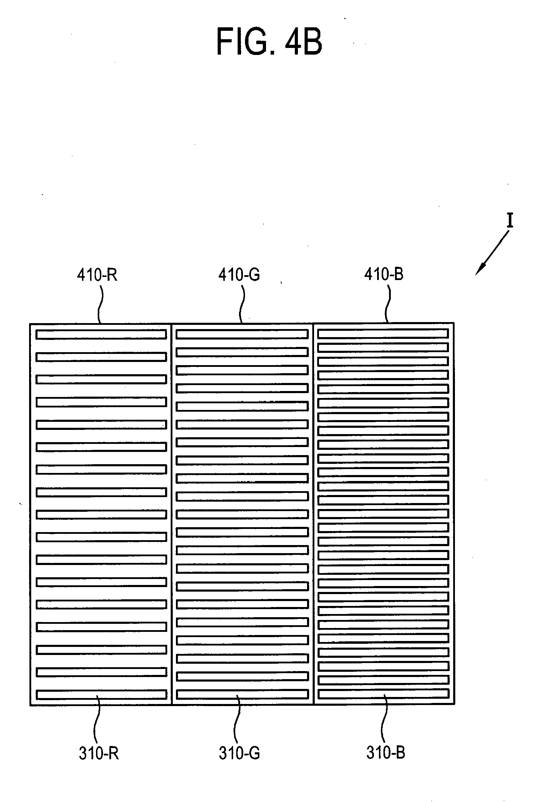

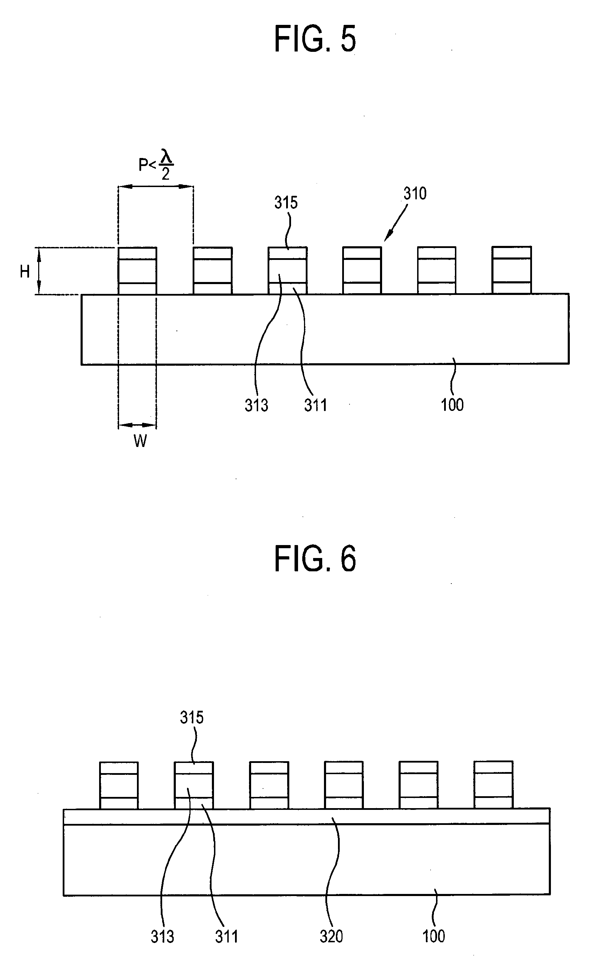

FIG. 3 is a view showing a color filter polarizing layer of FIG. 1. FIGs. 4A and 4B are views for explaining a metal linear grid of a sub pixel, and FIG. 5 is a cross-section view of a color filter polarizing layer of FIG. 3.

As shown therein, the metal linear grid 310 is shaped like a bar arranged in certain direction on the first substrate 100. The metal linear grid 310 is periodically arranged with a certain height (H) and width (W). The cycle, i.e., the pitch of the metal linear grid 310 is controlled differently according to desired colors of light.

If a pitch of a diffraction grid is adjusted to be equal to or shorter than 1/2 of the wavelength of the light, a diffraction wave is not formed but only transmitted light and reflected light exist. As shown therein, when the incident light passes through the metal linear grid 310 shaped like a slit, the first polarized component of the incident light, which is perpendicular to the metal linear grid 310, is transmitted through the first substrate 100, but a second polarized component, which is perpendicular to the metal linear grid 310, becomes reflected light which is reflected once again. That is, the incident light passing through the color filter polarizing layer 300 is polarized with respect to a certain direction. Meanwhile, air may be formed in between the metal linear grids 310.

FIG. 4A is a view showing a pixel I and sub pixels 410-R, 410-G and 410-B constituting the pixel I. In this exemplary embodiment, the pixel I includes a red sub pixel 410-R formed in a region where red light is emitted, a green sub pixel 410-G formed in a region where green light is emitted, and a blue sub pixel 410-B formed in a region where blue light is emitted. The color filter polarizing layer 300 corresponding to such a pixel layer 400 is formed with the metal linear grid 310 having different pitches according to the sub pixels 410-R, 410-G and 410-B.

FIG. 4B is a view showing the metal linear grid 310 corresponding to the sub pixels 410-R, 410-G and 410-B. The metal linear grid 310 includes a red metal linear grid 310-R formed in a region corresponding to the red sub pixel 410-R, a green metal linear grid 310-G formed in a region corresponding to the green sub pixel 410-G, and a blue metal linear grid 310-B formed in a region corresponding to the blue sub pixel 410-B.

The red metal linear grid 310-R is arranged such that every pitch is shorter than 1/2 of a red light wavelength, the green metal linear grid 310-G is arranged such that every pitch is shorter than 1/2 of a green light wavelength, and the blue metal linear grid 310-B is arranged such that every pitch is shorter than 1/2 of a blue light wavelength. Thus, each pitch of the metal linear grids 310-R, 310-G and 310-B is adjusted in accordance with the sub pixels 410-R, 410-G and 410-B, so that the wavelength of the incident light can be controlled to thereby allow the sub pixels 410 to emit light of different colors, respectively.

The pitch of the red metal linear grid 310-R is shorter than 1/2 of the red light wavelength, i.e., about 330 ∼ 390nm, and the incident light is separated into a red light spectrum having a first polarized component while passing through the red metal linear grid 310-R. The pitch of the green metal linear grid 310-G is shorter than 1/2 of the green light wavelength, i.e., about 250 ∼ 290nm, and the incident light is separated into a green light spectrum having the first polarized component. The pitch of the blue metal linear grid 310-B may be set up to be shorter than 1/2 of the blue light wavelength, i.e., about 220 ∼ 240nm. The light passing through the blue metal linear grid 310-B is separated into a blue light spectrum having the first polarized component. In other words, the pitches of the metal linear grid 310 are decreased in order of the red metal linear grid 310-R, the green metal linear grid 310-G and the blue metal linear grid 310-B. The pitch of the metal linear grid 310 is adjusted in accordance with light wavelengths of color desired to be emitted from the display panel 1000, and light of yellow, cyan and magenta may be emitted instead of the foregoing light of red, green and blue.

As shown in FIG. 5, the metal linear grid 310 in this exemplary embodiment includes a first metal layer 311, an insulating layer 313 and a second metal layer 315 stacked in sequence. The first metal layer 311 and the second metal layer 315 may be made of metal such as Al, Ag, etc. and may have a height of less than about 100nm. In this exemplary embodiment, each of the first metal layer 311 and the second metal layer 315 may be formed to have a height of about 40nm. The insulating layer 313 stacked between the first metal layer 311 and the second metal layer 315 may include a dielectric material such as ZnSe and TiO2, and may be formed to have a height of less than about 150nm. The height of the metal linear grid 310 is larger than the width thereof, and a ratio of height to width may be 2 ∼ 4, for example, 3. In the metal linear grid 310, the width, the height, the pitch, the ratio of height to width, and a ratio of pitch to width may be varied depending on the material forming the metal linear grid 310. That is, simulation about optical transmittance is conducted by taking the kind of metal, the height of dielectric material, etc. into account, and an optimal condition may be selected. Also, the width, the height, the pitch, the ratio of height to width, and a ratio of pitch to width of the metal linear grid 310 may be varied depending on color of emitted light, i.e., each sub pixel 410.

The principle that colored light is emitted from the metal layer 311, 315 of the metal linear grid 310 is based on Plasmon that free electrons in metal are collectively oscillated. Nano-sized metal shows Plasmon resonance on a surface of the metal due to the oscillation of the free electrons. The surface Plasmon resonance is collective charge density oscillation of the electrons on the surface of a metal thin film, and a surface Plasmon wave caused by the surface Plasmon resonance is a surface electromagnetic wave propagating along a boundary surface between the metal and the dielectric material adjacent to the metal. As a kind of surface electromagnetic wave propagating along the boundary surface between metal and the dielectric material, the surface Plasmon wave corresponds to a wave generated when light incident to the metal surface and having a certain wavelength is not totally reflected and causes a surface wave. If the metal linear grid 310 including the first metal layer 311, the insulating layer 313 and the second metal layer 315 is arranged in the form of slits in a certain cycle, the color of emitted light is varied depending on the cycle.

According to this exemplary embodiment, the metal linear grid 310 is configured to make white light filter into individual colors throughout a visible light region. This is to achieve a nano oscillator for quantum-Plasmon-quantum conversion within a certain oscillation wavelength, which enhances a pass bandwidth and makes compactness possible as compared with other color filtering methods. Also, the filtered light has already been naturally polarized, so that it can be directly applied to an LCD panel or the like without any separate polarizing layer.

Accordingly, the display panel 100 can generate polarized colored light through one color filter polarizing layer 300 instead of the existing polarizing film and color filter. Also, light that is not transmitted through the first substrate 100 is not absorbed but is instead reflected from the first metal layer 311 of the metal linear grid 310, making it likely to be reflected again toward the display panel 1000. That is, the total optical efficiency is improved so that the conventional dual brightness enhance film (DBEF) can be omitted.

If light enters through the bottom of the first substrate 100 and exits through the second substrate 200, the light of only the first polarized component enters the liquid crystal layer 500, and the light of the second polarized component is reflected from the first substrate 100. Typically, a backlight assembly (not shown) emitting light under the display panel 1000 includes a reflective plate that reflects light reflected from the first substrate 100 toward the display panel 1000 again. Metal contained in the metal linear grid 310 may have high reflectivity so that more much light can be recycled by the reflective plate and enter the first substrate 100, i.e., more much light of the second polarized component can enter the reflective plate. For example, the metal linear grid 310 may include metal having high reflectivity, such as Al, Ag, Cu, etc. Thus, if the highly-reflective metal causes the reflectivity of the metal linear grid 310, it is possible to omit the dual brightness enhance film (DBEF) used in the conventional display panel. Accordingly, there is an effect on reducing production costs of the display panel 1000, and it is possible to make the display apparatus including the display panel 1000 thin and lightweight.

FIG. 6 is a cross-section view of another color filter polarizing layer according to an exemplary embodiment.

As shown therein, the color filter polarizing layer 300 may further include a dielectric layer 320 formed under the metal linear grid 310. The dielectric layer 320 may be made of a material similar to the first substrate 100, and may contain MgF2. The dielectric layer 320 may be provided in the form of a film coupled to the first substrate 100. Here, the dielectric layer 320 may replace the first substrate 100 or may be omitted.

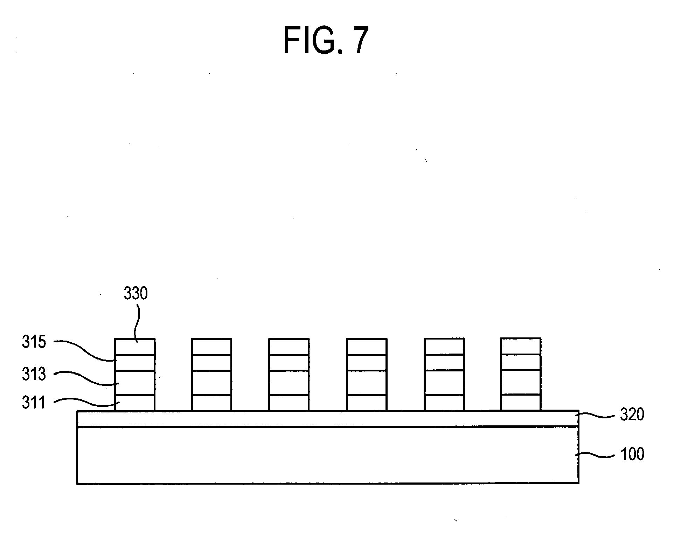

FIG. 7 is a cross-section view of still another color filter polarizing layer according to an exemplary embodiment.

As shown therein, the display panel 1000 may further include a light absorbing layer 330 formed on the metal linear grid 310 included in the first substrate 100 and absorbing light. If external light enters the display panel 1000 and is reflected again, there are problems that a contrast ratio of the display panel 1000 may be lowered and picture quality may be deteriorated due to the reflection of light. To prevent these problems, the first substrate 100 according to this exemplary embodiment includes the light absorbing layer 330 on the metal linear grid 310 in order to absorb undesired external light.

The light absorbing layer 330 may contain metal having low reflectivity, and or may include or be configured with carbon, chrome oxide, etc. for absorbing the light.

Alternatively, the light absorbing layer 330 may be formed not on the first substrate 100 but beneath the second substrate 200. That is, the external light is intercepted by the light absorbing layer and thus prevented from entering the display panel 1000.

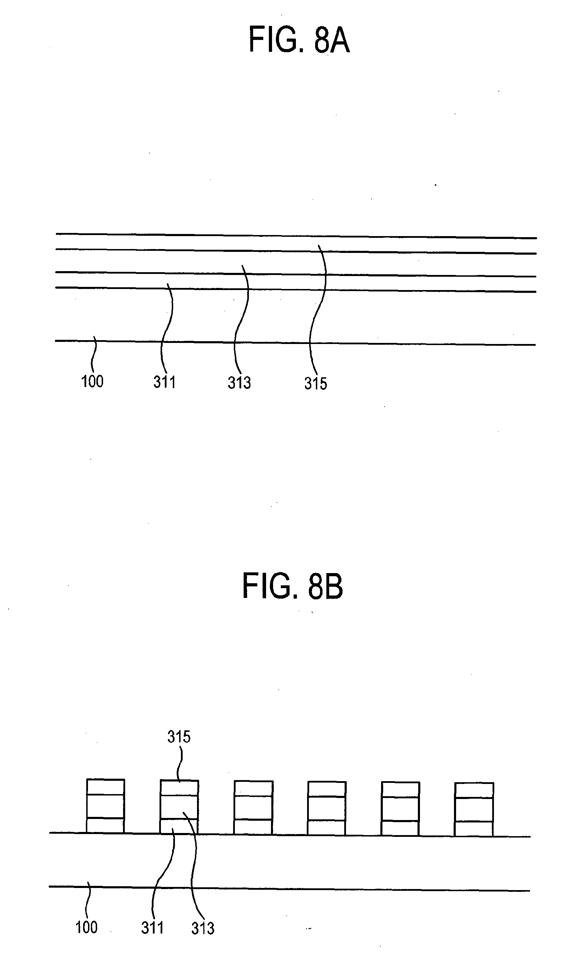

FIGs. 8A to 8E are views for explaining a manufacturing method for a display panel according to an exemplary embodiment.

As shown in FIG. 8A, the first metal layer 311, the insulating layer 313 and the second metal layer 315 are stacked in sequence by a sputtering method or the like in order to form a color filter polarizing layer 300 on the first substrate 100.

Then, as shown in FIG. 8B, a general patterning process is performed. In other words, photoresist is deposited, exposed to light through a mask, and developed and etched to thereby form the metal linear grid 310. That is, the first metal layer 311, the insulating layer 313 and the second metal layer 315 are not respectively formed but stacked in sequence and once patterned to form the metal linear grid 310. The process of forming the metal linear grid 310 may be achieved by any publicly-known patterning technique.

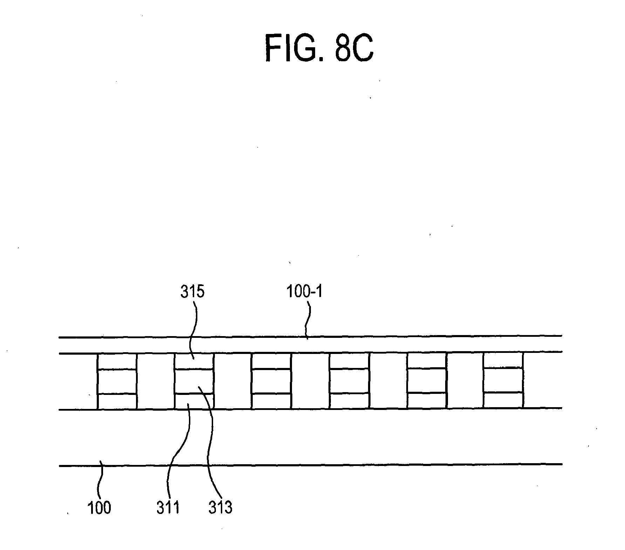

After forming the metal linear grid 310, as shown in FIG. 8C, the planarization layer 100-1 is formed for protecting and levelling the surface of the metal linear grid 310. The planarization layer 100-1 may contain silicon nitride SiNx.

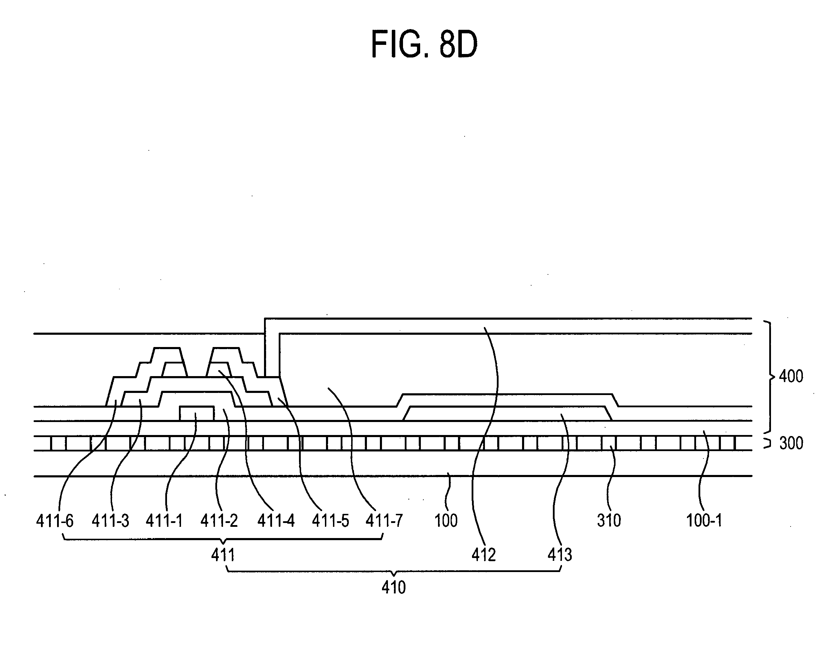

Then, as shown in FIG. 8D, the TFT 411 and the pixel electrode 412 electrically connected to the TFT 411 are formed on the planarization layer 100-1. The pixel electrode 412 may be formed by depositing metal by the sputtering method and patterning it.

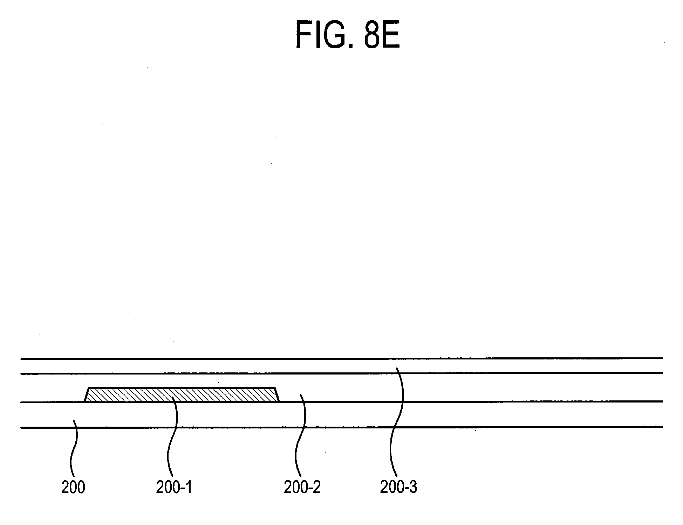

FIG. 8E is views for explaining a manufacturing method for the second substrate 200. As shown, the black matrix 200-1 is formed on the second substrate 200 in a region corresponding to the TFT 411, and the overcoat layer 200-2 is formed for levelling the black matrix 200-1. Further, the common electrode 200-3 containing a transparent conductive material is formed by a sputtering method.

Thereafter, if FIGs. 8D and 8E are coupled and then the polarizing film 600 is attached to an outside surface of the second substrate 200, the display panel 1000 is completed as shown in FIG. 2.

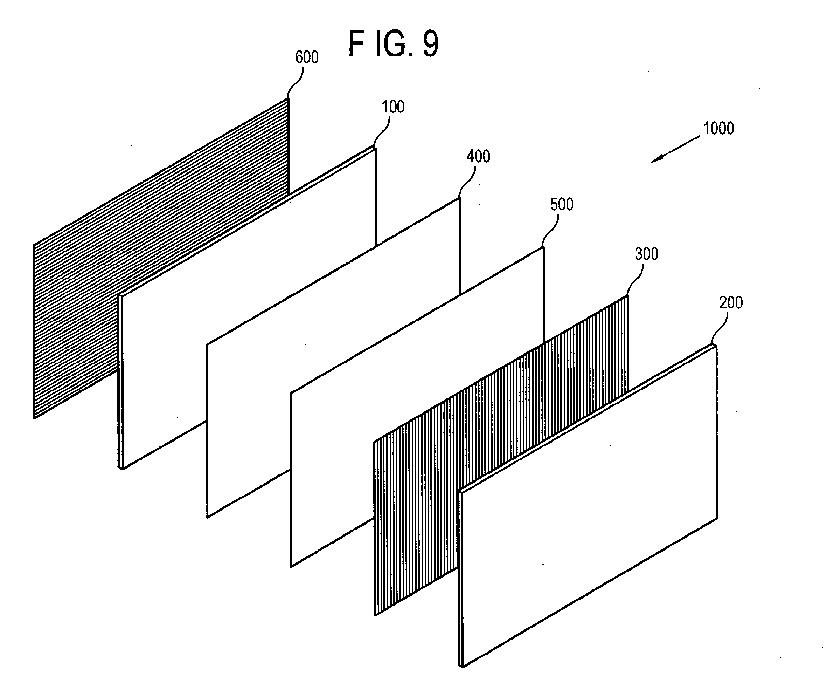

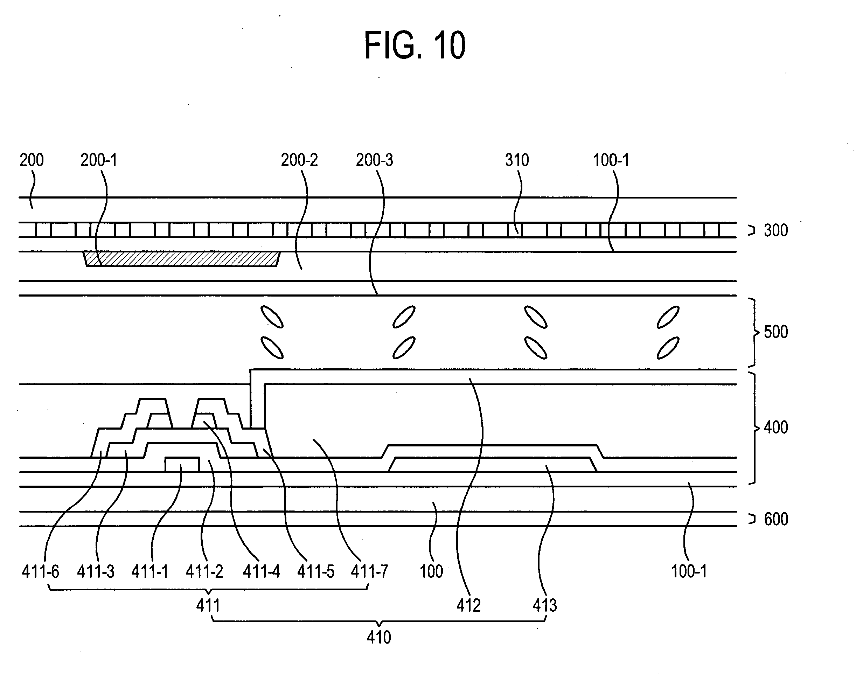

FIG. 9 is a view showing a layer structure of a display panel according to another exemplary embodiment, and FIG. 10 is a cross-section view of the display panel of FIG. 9.

As shown therein, the display panel 1000 according to this exemplary embodiment includes a polarizing film 600 formed on the outer surface of the firs substrate 100, and a color filter polarizing layer 300 formed on the second substrate 200. In other words, the color filter polarizing layer 300 may be arranged on not the pixel layer 400 but on the substrate formed with the black matrix 200-1. If light enters through the bottom of the first substrate 100, the light of second polarized component passed through the polarizing film 600 passes through the liquid crystal layer 500, and then emits as the light of the first polarized component with different colors while passing through the color filter polarizing layer 300. Each of the color filter polarizing layer 300 and the polarizing film 600 may be selectively formed on the same or different substrates as the pixel electrode 400. Of course, light may enter though the second substrate 200 and exit through the first substrate 100.

In this exemplary embodiment, because the metal linear grid 310 is formed on the second substrate 200 through which the light exits, the metal linear grid 310 may contain metal having low reflectivity so as to suppress reflection of external light and absorb the light. The metal linear grid 310 may undergo additional processes for decreasing the reflectivity of the metal, or may include or be configured with carbon, chrome oxide, etc. for absorbing the light.

In the meantime, the metal linear grid 310 according to another exemplary embodiment may include metal having high strength in consideration of external impacts. For example, the second metal linear grid 610 may contain MoW or the like alloy, or may contain conductive polymer capable of performing substantially the same function as the metal layer.

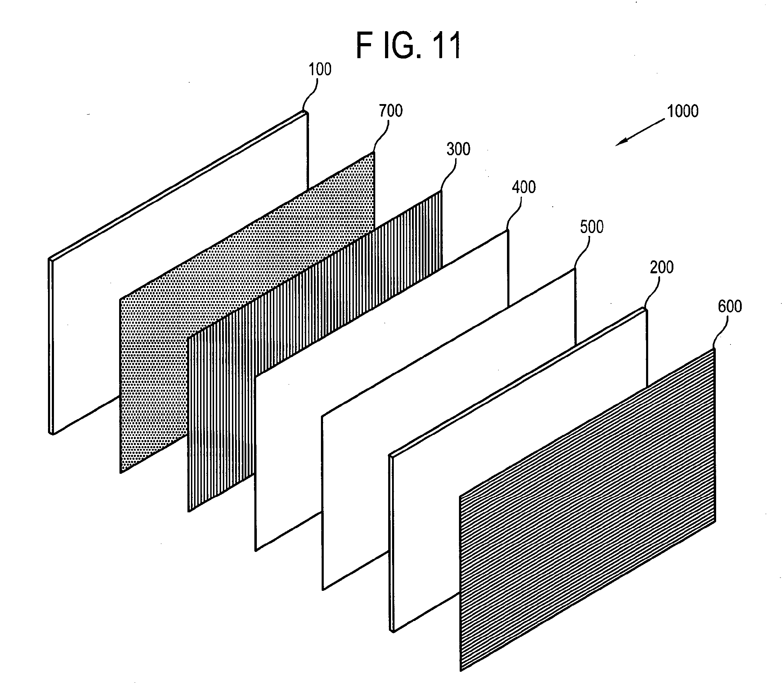

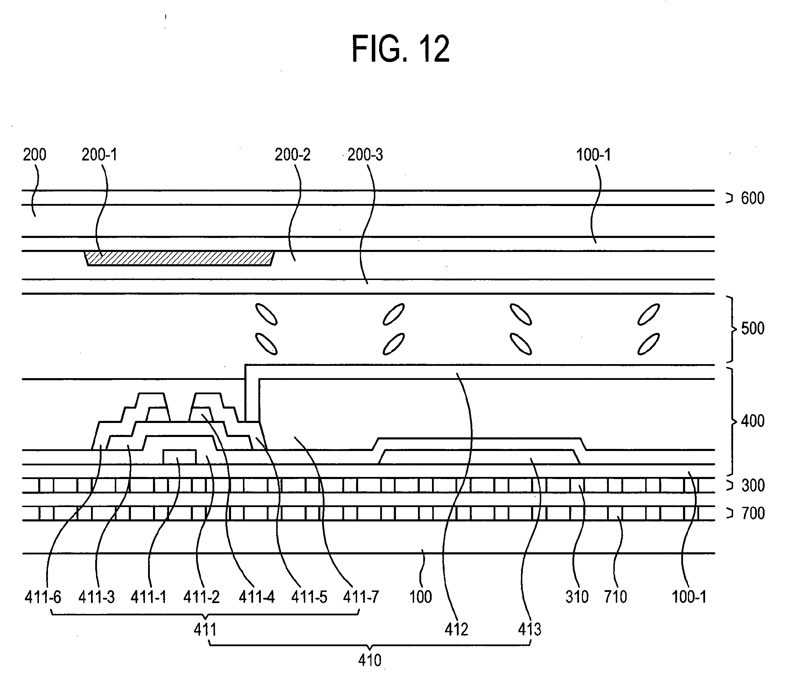

FIG. 11 is a view showing a layer structure of a display panel according to still another exemplary embodiment, and FIG. 12 is a cross-section of the display panel of FIG. 11.

As shown therein, the display panel 1000 in this exemplary embodiment further includes an additional polarizing layer 700 beneath the color filter polarizing layer 300 to transmit the first polarized component. The additional polarizing layer 700 may include an additional metal linear grid 710 that contains substantially the same metal as metal contained in the metal linear grid 310 and is arranged in the same direction as the metal linear grid 310. The additional metal linear grid 710 is arranged in the same direction as the metal linear grid 310, and thus transmits the first polarized component. The light of the first polarized component passed through the additional polarizing layer 700 is emitted with red, blue and green colors while passing through the color filter polarizing layer 300.

The metal layer contained in the additional metal linear grid 710 may contain highly-reflective metal, e.g., at least one of Al, Ag and Cu. Further, a light absorbing layer may be further provided on the metal layer and absorb external light.

The display panel 1000 may further include a printed circuit board mounted with a gate driving integrated chip (IC) and a data chip film package although they are not shown. Also, a compensation film (not shown) may be further provided outside the first substrate 100 and the second substrate 200.

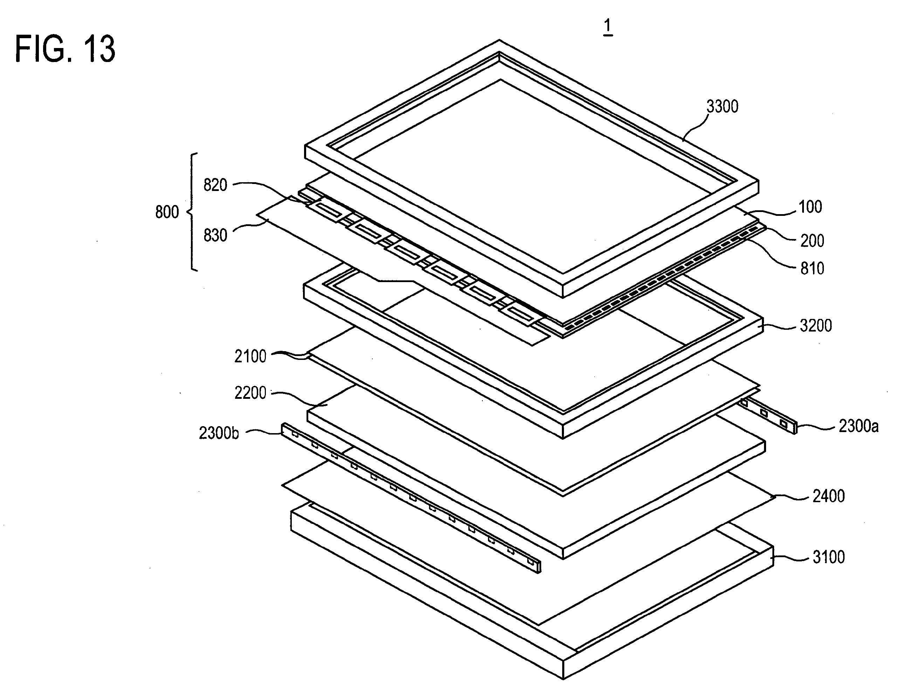

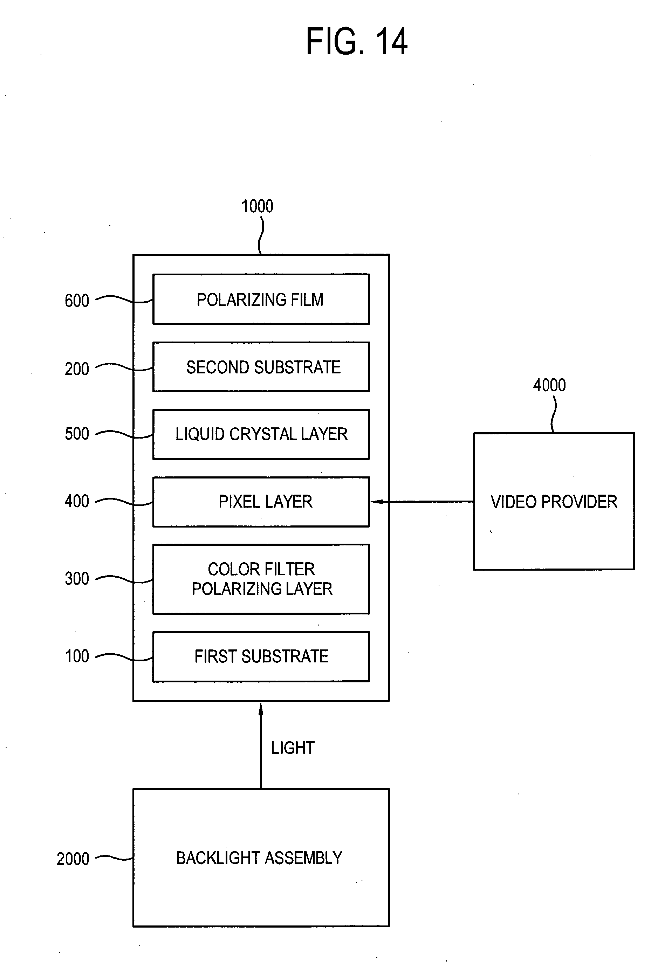

FIG. 13 is a schematic view of a display apparatus according to an exemplary embodiment, and FIG. 14 is a control block diagram of a display apparatus according to an exemplary embodiment.

As shown therein, the display apparatus 1 includes the display panel 1000, the backlight assembly 2000, accommodating containers 3100, 3200, 3300 accommodating the display panel 1000 and the backlight assembly 2000, and a video provider 4000.

The display panel 1000 includes the first substrate 100, the second substrate 200 opposite to the first substrate 100, the liquid crystal layer (not shown) interposed between the first substrate 100 and the second substrate 200, and a panel driver 800 for driving the pixel layer 400 to display a video signal. The panel driver 800 may include a gate driving IC 810, a data chip film package 820, and a printed circuit board 830.

The first substrate 100 and the second substrate 200 may be formed with the pixel layer 400, the color filter polarizing layer 300, the polarizing film 600, the black matrix 200-1, the common electrode 200-3, etc. The color filter polarizing layer 300 polarizes the incident light entering the first substrate 100, and the polarizing film 600 polarizes light exiting through the display panel 1000.

The display panel 1000 receives external light and controls intensity of light passing through the liquid crystal layer interposed between the first substrate 100 and the second substrate 200, thereby displaying an image.

The gate driving IC 810 is integrated and formed on the first substrate 100, and connected to each gate line (not shown) formed on the first substrate 100. Further, the data chip film package 820 may be connected to each data line (not shown) formed on the first substrate 100. Here, the data chip film package 820 may include a tape automated bonding (TAB) tape where a semiconductor chip is adhered to a wiring pattern formed on a base film by TAB technology. As an example of the chip film package, a tape carrier package (TCP), a chip on film (COF), etc. may be used.

Meanwhile, the printed circuit board 830 may be mounted with driving components for inputting a gate driving signal to a gate driving IC 810 and for inputting a data driving signal to a data chip film package 820.

The backlight assembly 2000 may include a light guide plate 2200 for guiding light, first and second light sources 2300a and 2300b for emitting light, a reflective sheet 2400 placed beneath the light guide plate 2200, and one or more optical sheets 2100.

The light guide plate 2200 serves to guide the light to be supplied to the display panel 1000. The light guide plate 2200 may be made of transparent plastic panel such as acryl, and guide light emitted from the first and second light sources 2300a and 2300b to travel toward the display panel 1000 formed on the light guide plate 2000. On the rear of the light guide plate 2200, there may be various patterns for changing a traveling direction of the light entering the inside of the light guide plate 2200 toward the display panel 1000.

As shown in the drawing, the first light source 2300a and the second light source 2300b may include a light emitting diode (LED) as a point light source. The light source is not limited to the LED, and may include a line light source such as a cold cathode fluorescent lamp (CCFL) or a hot fluorescent lamp (HCFL). The first light source 2300a and the second light source 2300b are electrically connected with an inverter (not shown) supplying power, and receive the power.

The reflective sheet 2400 is provided under the light guide plate 2200 and reflects the light emitted under the light guide plate 2200 upward. Specifically, the light, which is not reflected by a fine dot pattern formed on the back of the light guide plate 2200, is reflected again toward the light guide plate 2200, thereby decreasing loss in the light entering the display panel 1000 and enhancing uniformity of light transmitting through the exit surface of the light guide plate 2200.

One or more optical sheets 2100 are provided on the top of the light guide plate 2200 and serve to diffuse and condense the light transmitted from the light guide plate 2200. The optical sheets 2100 may further include a diffusion sheet, a prism sheet, a protection sheet, etc. The diffusion sheet may be placed between the light guide plate 2200 and the prism sheet, and diffuses incident light from the light guide plate 2200 to thereby prevent the light from being partially concentrated. The prism sheet may include triangular prisms regularly arranged on the top thereof, and serve to condense the light diffused by the diffusion sheet in a direction perpendicular to the display panel 1000. The protection sheet may be formed on the prism sheet, to protect the surface of the prism sheet, and diffuse the light and thus uniformly distribute the light.

The accommodating container may include a lower accommodating container 3100, a middle accommodating container 3200 and an upper accommodating container 3300. The lower accommodating container 3100 may accommodate the reflective sheet 2400, the first and second light sources 2300a and 2300b, the light guide plate 2200, and one or more optical sheets 2100. The lower accommodating container 3100 may be made of metal having a strength capable of withstanding an external shock and ground ability.

The video provider 4000 connects with the display panel 1000 and provides a video signal. Although not shown in FIG. 13, the video provider 4000 may be arranged on the reflective sheet 2400 and the lower accommodating container 3100, or may be placed on the rear of the lower accommodating container 3100.

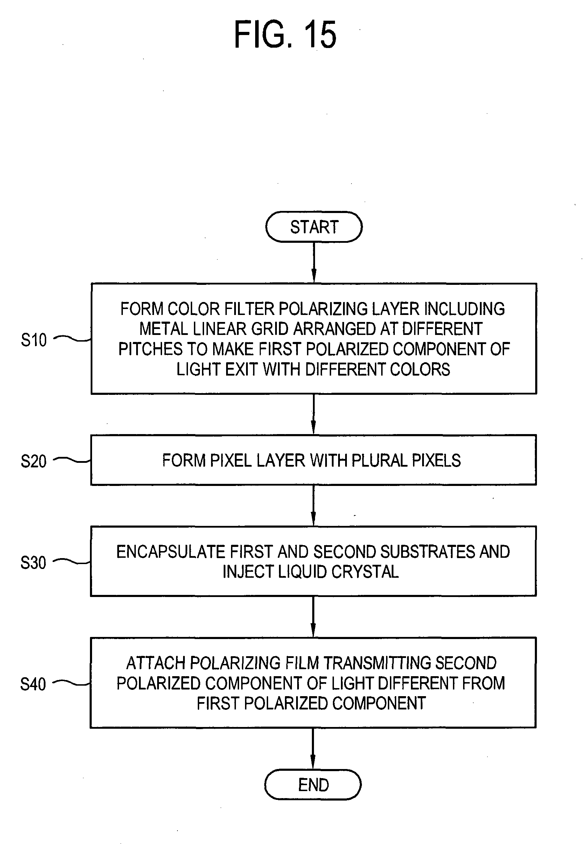

FIG. 15 is a view for explaining a manufacturing method of the display apparatus of FIG. 13.

First, at operation S10, the color filter polarizing layer 300 including the metal linear grid 310 arranged at different pitches to make the first polarized component of the light exit the display apparatus with different colors are formed on the first substrate 100. At this time, the metal linear grid 310 may include the red metal linear grid arranged such that every pitch is shorter than 1/2 of a red light wavelength, the green metal linear grid arranged such that every pitch is shorter than 1/2 of a green light wavelength, and the blue metal linear grid arranged such that every pitch is shorter than 1/2 of a blue light wavelength. Of course, the metal linear grid may be arranged or formed with pitches different from the above in accordance with the colors of the light. The metal linear grid 310 may be formed by stacking the first metal layer 311, the insulating layer 313 and the second metal layer 315 in sequence and applying the sputtering process thereto.

Beneath the metal linear grid 310 may be provided the dielectric layer 320, and on the metal linear grid 310 may be provided the light absorbing layer 330 for suppressing reflection of light.

Characteristics of metal forming the metal linear grid 310, i.e., reflectivity or strength of the metal may be varied depending on whether the metal linear grid 310 is formed on the substrate for incident light or on the substrate for exiting light.

On the color filter polarizing layer 300, the pixel layer 400 including the plurality of sub pixels 410 is formed at operation S20. Alternatively, the pixel layer 400 may be formed on the substrate different from the color filter polarizing layer 300, i.e., the second substrate 200.

On the second substrate 200 having no pixel layer 400, the black matrix 200-1, the overcoat layer 200-2 and the common electrode 200-3 are formed.

Then, at operation S30, the first substrate 100 and the second substrate 200 are encapsulated, and the liquid crystal is injected between the first substrate 100 and the second substrate 200.

At operation S40, the polarizing film 600 is attached to the outer surface of the second substrate 200 having no color filter polarizing layer 300, thereby transmitting the second polarized component of light different from the first polarized component. With this process, the display panel 1000 is completed.

Next, the video provider 4000 capable of supplying video data to the sub pixels 410 and the panel driver 800 for driving the pixel layer 400 are connected to the substrate, and assembled to the backlight assembly 2000 including the light sources 2300a and 2300b, thereby completing the display apparatus 1 as shown in FIG. 13.

As described above, according to an exemplary embodiment, there are provided a display panel and a method of manufacturing a display apparatus comprising the same, in which manufacturing costs are decreased and a manufacturing process is simplified.

According to another exemplary embodiment, there are provided a display panel having improved optical efficiency and a method of manufacturing a display apparatus comprising the same.

Although a few exemplary embodiments have been shown and described, it will be appreciated by those skilled in the art that changes may be made in these exemplary embodiments without departing from the principles of the inventive concept, the scope of which is defined in the appended claims.

## Claims

1. A display panel (1000) with a liquid crystal layer arranged between first and second substrates (100, 200) which are disposed opposite to each other wherein the display panel (1000) further comprises;
a first polarizing layer (300) which is formed on a surface of one of the first and second substrates between the first and second substrates (100, 200), and comprises a metal linear grid (310); and
a further polarizing layer formed on an outer surface of the other one of the first and second substrates (100, 200), **characterised in that** the first polarizing layer (300) is a color filter polarizing layer
wherein the metal linear grid (310) is composed of regions of different pitches to transmit in respective different colors a first polarized component of incident light and comprises a first metal layer (311), an insulating layer (313), and a second metal layer (315) stacked in sequence.

2. The display panel (1000) according to claim 1, wherein the further polarizing layer comprises a polarizing film (600) transmitting a second polarized component different from the first polarized component.

3. The display panel (1000) according to claim 1, further comprising a pixel layer (400) formed on the surface of one of the first and second substrates (100, 200) and including a plurality of pixels, each pixel comprising a plurality of sub pixels (410),
wherein at least three sub pixels are arranged with corresponding three different pitches of the metal linear grid (310).

4. The display panel (1000) according to claim 1, wherein the metal linear grid (310) comprises a red metal linear grid (310-R) arranged to transmit red light, a green metal linear grid (310-G) arranged to transmit green light and a blue metal linear grid (310-B) arranged to transmit blue light, and the red metal linear grid (310-R) is arranged such that every pitch is shorter than 1/2 of a red light wavelength, the green metal linear grid (310-G) is arranged such that every pitch is shorter than 1/2 of a green light wavelength, and the blue metal linear grid (310-B) is arranged such that every pitch is shorter than 1/2 of a blue light wavelength.

5. The display panel according to claim 1, further comprising an additional polarizing layer (700) between the color filter polarizing layer (300) and the substrate on which the color filter polarizing layer (300) is formed, the additional polarizing layer being arranged to transmit the first polarized component, wherein the additional polarizing layer (700) comprises an additional metal linear grid (710) substantially arranged in the same direction as the metal linear grid (310) wherein the first polarized component of the incident light passing through the color filter polarizing layer (300) is in red, blue and green colors.

6. The display panel (1000) according to claim 1, wherein the height of the metal linear grid (310) is larger than the width thereof.

7. The display panel (1000) according to claim 1, wherein the color filter polarizing layer (300) further comprises a dielectric layer (320) formed between the metal linear grid (310) and the substrate (100, 200) on which the metal linear grid is formed.

8. A method of manufacturing a display apparatus comprising:
forming a color filter polarizing layer including a metal linear grid on a surface of a first substrate located between the first substrate and a second substrate (S10);
forming a pixel layer including a plurality of sub pixels on the color filter polarizing layer (S20);
encapsulating the first and second substrates and injecting a liquid crystal in a space formed between the first and second substrates (S30); and
forming a polarizing film on a surface of the second substrate opposite to a surface between the first and second substrates (S40),
wherein the metal linear grid comprises a first metal layer, an insulating layer, and a second metal layer stacked in sequence and is arranged in regions of different pitches to transmit in respective different colors a first polarized component of incident light.

## Patentansprüche

1. Anzeigetafel (1000) mit einer Flüssigkristallschicht, die zwischen einem ersten und einem zweiten Substrat (100, 200) angeordnet ist, die einander gegenüber angeordnet sind, wobei die Anzeigetafel (1000) ferner Folgendes umfasst:
eine erste Polarisationsschicht (300), die auf einer Oberfläche entweder des ersten oder des zweiten Substrats (100, 200) gebildet ist, und ein metallisches Lineargitter (310), und
eine weitere Polarisationsschicht, die auf einer äußeren Oberfläche des anderen des ersten und des zweiten Substrats (100, 200) gebildet ist, **dadurch gekennzeichnet, dass** die erste Polarisationsschicht (300) eine Farbfilterpolarisationsschicht ist,
wobei das metallische Lineargitter (310) aus Bereichen mit unterschiedlichen Teilungen besteht, um eine erste polarisierte Komponente des einfallenden Lichts in jeweils unterschiedlichen Farben durchzulassen, und eine erste Metallschicht (311), eine Isolierschicht (313) und eine zweite Metallschicht (315), die nacheinander geschichtet sind, umfasst.

2. Anzeigetafel (1000) nach Anspruch 1, wobei die Polarisationsschicht ferner einen Polarisationsfilm (600) umfasst, der eine zweite polarisierte Komponente, die von der ersten polarisierten Komponente verschieden ist, durchlässt.

3. Anzeigetafel (1000) nach Anspruch 1, die ferner eine Pixelschicht (400) umfasst, die auf der Oberfläche entweder des ersten oder des zweiten Substrats (100, 200) gebildet ist, und die mehrere Pixel umfasst, wobei jedes Pixel mehrere Unterpixel (410) umfasst,
wobei mindestens drei Unterpixel mit den entsprechenden drei unterschiedlichen Teilungen des metallischen Lineargitters (310) angeordnet sind.

4. Anzeigetafel (1000) nach Anspruch 1, wobei das metallische Lineargitter (310) ein rotes metallisches Lineargitter (310-R), das ausgelegt ist, um rotes Licht durchzulassen, ein grünes metallisches Lineargitter (310-G), das ausgelegt ist, um grünes Licht durchzulassen, und ein blaues metallisches Lineargitter (310-B), das ausgelegt ist, um blaues Licht durchzulassen, umfasst und das rote metallische Lineargitter (310-R) so ausgelegt ist, dass jede Teilung kürzer als 1/2 einer roten Lichtwellenlänge ist, das grüne metallische Lineargitter (310-G) so ausgelegt ist, dass jede Teilung kürzer als 1/2 einer grünen Lichtwellenlänge ist, und das blaue metallische Lineargitter (310-B) so ausgelegt ist, dass jede Teilung kürzer als 1/2 der blauen Lichtwellenlänge ist.

5. Anzeigetafel nach Anspruch 1, die ferner eine zusätzliche Polarisationsschicht (700) zwischen der Farbfilterpolarisationsschicht (300) und dem Substrat, auf dem die Farbfilterpolarisationsschicht (300) gebildet ist, umfasst, wobei die zusätzliche Polarisationsschicht angeordnet ist, um die erste polarisierte Komponente durchzulassen, wobei die zusätzliche Polarisationsschicht (700) ein zusätzliches metallisches Lineargitter (710) umfasst, das im Wesentlichen in der gleichen Richtung wie das metallische Lineargitter (310) angeordnet ist, wobei die erste polarisierte Komponente des einfallenden Lichts, die durch die Farbfilterpolarisationsschicht (300) geht, rote, blaue und grüne Farben hat.

6. Anzeigetafel (1000) nach Anspruch 1, wobei die Höhe des metallischen Lineargitters (310) größer ist als ihre Breite.

7. Anzeigetafel (1000) nach Anspruch 1, wobei die Farbfilterpolarisationsschicht (300) ferner eine dielektrische Schicht (320) umfasst, die zwischen dem metallischen Lineargitter (310) und dem Substrat (100, 200), auf dem das metallische Lineargitter gebildet ist, gebildet ist.

8. Verfahren zum Herstellen einer Anzeigevorrichtung, das Folgendes umfasst:
Bilden einer Farbfilterpolarisationsschicht, die ein metallisches Lineargitter umfasst, auf einer Oberfläche des ersten Substrats, die zwischen dem ersten Substrat und einem zweiten Substrat angeordnet ist (S10) ;
Bilden einer Pixelschicht, die mehrere Unterpixel umfasst, auf der Farbfilterpolarisationsschicht (S20);
Einkapseln des ersten und des zweiten Substrats und Einspritzen eines Flüssigkristalls in einen Raum, der zwischen dem ersten und dem zweiten Substrat gebildet ist, (S30) und
Bilden eines Polarisationsfilms auf einer Oberfläche des zweiten Substrats, die gegenüber einer Oberfläche zwischen dem ersten und dem zweiten Substrat liegt, (S40),
wobei das metallische Lineargitter eine erste Metallschicht, eine Isolierschicht und eine zweite Metallschicht umfasst, die nacheinander geschichtet sind, und in Bereichen mit unterschiedlichen Teilungen angeordnet ist, um eine erste polarisierte Komponente des einfallenden Lichts in jeweils unterschiedlichen Farben durchzulassen

## Revendications

1. Panneau d'affichage (1000) comportant une couche de cristaux liquides disposée entre des premier et second substrats (100, 200) qui sont disposés de manière opposée l'un à l'autre, dans lequel le panneau d'affichage (1000) comprend en outre :
une première couche polarisante (300) qui est formée sur une surface de l'un des premier et second substrats entre les premier et second substrats (100, 200), et
comprend une grille linéaire métallique (310) ; et
une couche polarisante supplémentaire formée sur une surface extérieure de l'autre des premier et second substrats (100, 200), **caractérisé en ce que** la première couche polarisante (300) est une couche polarisante à filtre coloré ;
dans lequel la grille linéaire métallique (310) est composée de régions de pas différents pour transmettre dans des couleurs respectives une première composante polarisée de lumière incidente et comprend une première couche métallique (311), une couche isolante (313) et
une seconde couche métallique (315) empilées en séquence.

2. Panneau d'affichage (1000) selon la revendication 1, dans lequel la couche polarisante supplémentaire comprend un film polarisant (600) transmettant une seconde composante polarisée différente de la première composante polarisée.

3. Panneau d'affichage (1000) selon la revendication 1, comprenant en outre une couche de pixels (400) formée sur la surface de l'un des premier et second substrats (100, 200) et comportant une pluralité de pixels, chaque pixel comprenant une pluralité de sous-pixels (410),
dans lequel au moins trois sous-pixels sont agencés avec trois pas différents correspondants de la grille linéaire métallique (310).

4. Panneau d'affichage (1000) selon la revendication 1, dans lequel la grille linéaire métallique (310) comprend une grille linéaire métallique rouge (310-R) conçue pour transmettre de la lumière rouge, une grille linéaire métallique verte (310-G) conçue pour transmettre de la lumière verte, et une grille linéaire métallique bleue (310-B) conçue pour transmettre de la lumière bleue, et la grille linéaire métallique rouge (310-R) est conçue de manière à ce que chaque pas soit plus court que 1/2 fois une longueur d'onde de lumière rouge, la grille linéaire métallique verte (310-G) est conçue de manière à ce que chaque pas soit plus court que 1/2 fois une longueur d'onde de lumière verte, et la grille linéaire métallique bleue (310-B) est conçue de manière à ce que chaque pas soit plus court que 1/2 fois une longueur d'onde de lumière bleue.

5. Panneau d'affichage selon la revendication 1, comprenant en outre une couche polarisante additionnelle (700) entre la couche polarisante à filtre coloré (300) et le substrat sur lequel est formée la couche polarisante à filtre coloré (300), la couche polarisante additionnelle étant conçue pour transmettre la première composante polarisée, dans lequel la couche polarisante additionnelle (700) comprend une grille linéaire métallique additionnelle (710) disposée sensiblement dans la même direction que la grille linéaire métallique (310), dans lequel la première composante polarisée de la lumière incidente passant à travers la couche polarisante à filtre coloré (300) est de couleur rouge, bleue et verte.

6. Panneau d'affichage (1000) selon la revendication 1, dans lequel la hauteur de la grille linéaire métallique (310) est supérieure à sa largeur.

7. Panneau d'affichage (1000) selon la revendication 1, dans lequel la couche polarisante à filtre coloré (300) comprend en outre une couche diélectrique (320) formée entre la grille linéaire métallique (310) et le substrat (100, 200) sur lequel est formée la grille linéaire métallique.

8. Procédé de fabrication d'un appareil d'affichage comprenant :
la formation d'une couche polarisante à filtre coloré comportant une grille linéaire métallique sur une surface d'un premier substrat située entre le premier substrat et un second substrat (S10) ;
la formation d'une couche de pixels comportant une pluralité de sous-pixels sur la couche polarisante à filtre coloré (S20) ;
l'encapsulation des premier et second substrats et
l'injection d'un cristal liquide dans un espace formé entre les premier et second substrats (S30) ; et
la formation d'un film polarisant sur une surface du second substrat qui est opposée à une surface entre les premier et second substrats (S40),
dans lequel la grille linéaire métallique comprend une première couche métallique, une couche isolante et une seconde couche métallique empilée en séquence, et est disposée dans des régions de pas différents pour transmettre dans des couleurs différentes respectives une première composante polarisée de lumière incidente.
